# EUROPÄISCHE PATENTSCHRIFT

(11) **EP 1 095 835 B1**
(45) Veröffentlichungstag und Bekanntmachung des Hinweises auf die Patenterteilung: **07.11.2007**
(21) Anmeldenummer: 00120241.5
(22) Anmeldetag: 27.09.2000
(51) Int. Cl.: B60T 11/32, B60T 17/22, B60T 17/08

(54) **Feststellbremsanlage-Schutzschaltung für Lastkraftwagen mit der Einrichtung für Anhänger- oder Sattelzugbetrieb**
Protective circuit for parking brake system for commercial vehicles with device for trailer or semi-trailer mode
Circuit de protection pour système de freinage de stationnement pour camions avec dispositif pour utilisation avec remorque ou semi-remorque

(30) Priorität: 26.10.1999 DE 19951394
(43) Veröffentlichungstag der Anmeldung: 02.05.2001
(73) Patentinhaber: MAN Nutzfahrzeuge Aktiengesellschaft, 80976 München (DE)
(72) Erfinder: Kolland, Wolfgang Dipl.-Ing.(FH), 81245 München (DE)

(56) Entgegenhaltungen:
- EP-A- 0 830 997
- EP-A- 0 831 383
- DE-A- 19 704 358
- DE-C- 4 343 840
- DE-C- 19 821 420

## Beschreibung

Die Erfindung betrifft eine Feststellbremsanlage-Schutzschaltung nach dem Oberbegriff des Patentanspruches 1.

Eine Schutzvorrichtung dieser Art ist aus der DE 197 04 358 A1 bekannt.

Die genannte Schutzvorrichtung ist ein Vierkreis-Schutzventilaggregat, das, wie andere Mehrkreisschutzventile auch, einen defekten Druckluftkreis von den intakten Druckluftkreisen trennt aber zusätzlich über eine kleine Düse in einer Schalteinrichtung langsam Druckluft aus dem Feststell- und Anhängerbremskreis an die Umgebung austreten lassen kann. Die Wirkung setzt bei Stillsetzen des Fahrzeuges ein, wenn der Druck der Druckluft in einem der Betriebsbremskreise unter einen unteren Schwellenwert fällt.

Das Fahrzeug, ohne oder mit Anhänger, kann erst dann wieder wegfahren, wenn alle Druckluftkreise über dem Sicherungsdruck liegen und sich die Feststellbremsen gelöst haben. In dem gesetzten Fall, ein Betriebsbremskreis ist defekt und es ist mehr als ein schleichender Druckverlust vorhanden, lösen sich die Federspeicherbremszylinder nicht, das Fahrzeug kann nicht wegfahren und es ist eine Reparatur nötig. Wenn es sich in einem Betriebsbremskreis aber um einen schleichenden Druckverlust handelt, kann, abhängig von der Abstellzeit und der Menge des schleichenden Druckverlustes, die gesamte Bremsanlage einschließlich aller Druckluftvorratsbehälter drucklos werden.

In diesem Fall dauert das Wiederbefüllen der Anlage besonders lange und muß bei stehendem Fahrzeug und laufendem Motor erfolgen, was störend und energieaufwendig ist. Die EG-RL 98/12/EG, Anhang V 2.3, die nachfolgend genannt ist, wird aber erfüllt.

### Auszug aus EG-RL 98/12/EG, Anhang V 2.3

".... Desgleichen dürfen sich die Federspeicherbremsen, nachdem sie betätigt wurden, erst lösen, wenn der Druck in der Betriebsbremsanlage hinreichend hoch ist, um bei beladenem Fahrzeug sicherzustellen, daß bei Betätigung der Betriebsbremsanlage zumindest die vorgeschriebene Restbremswirkung erreicht wird. ..."

Ein handelsübliches Mehrkreisschutzventil hat die Aufgabe, einen oder mehrere defekte Druckluftkreise von den anderen intakten Druckluftkreisen abzutrennen und weiterhin die intakten Druckluftkreise mit Druckluft zu versorgen.

In den genannten handelsüblichen Mehrkreisschutzventilen existiert eine Prioritätsschaltung, nach der erst die Betriebsbremskreise mindestens über den unteren Schließdruck, auch Sicherungsdruck genannt, befüllt werden, bevor Druckluft in den Feststell- und Anhängerbremskreis (Bremskreis 3) geleitet werden darf.

Wenn die Betriebsbremskreise 1 und 2 intakt sind, wird die EG-RL 98/12/EG, Anhang V 2.3 eingehalten.

Wenn aber im Extremfall beide Betriebsbremskreise defekt oder ohne Druckluft sind, dürften die Federspeicherbremszylinder nicht lösbar und das Fahrzeug nicht fahrbar sein. Da aber in diesem Fall, Stand der Technik, aus dem Druckluftvorratsbehälter für den Bremskreis 3 Druckluft über das Rückschlagventil, ein gelöstes Feststellbremsventil und das Relaisventil strömen kann, können die Federspeicherbremszylinder mit Druckluft beaufschlagt und gelöst werden. Das Fahrzeug könnte weggefahren werden, obwohl in beiden Betriebsbremskreisen nahezu keine Druckluft mehr vorhanden sein könnte.

Mit den handelsüblichen Mehrkreisschutzventilen wird somit die genannte EG-RL für diesen Fall nicht eingehalten.

In diesem Zusammenhang ist aus der DE 198 21 420 C1 eine Feststellbremsenschutzschaltung bekannt, bei der ein Rückschlagventil derart mit dem Mehrkreisschutzventil verbunden ist, dass der Druckluftstrom nur in den für den Anhänger vorgesehenen Bremskreis strömt und somit vom Luftverbrauch für die Zugfahrzeug-Feststellbremsanlage abgetrennt ist. Um dies zu erreichen, ist innerhalb eines Gehäuses in die unterschiedlichen Druckluftausgänge eines Mehrkreisschutzventils jeweils ein Rückschlagventil integriert. Mit Hilfe der derart angeordneten Rückschlagventile wird sichergestellt, dass aus den unterschiedlichen Bremskreisen keine Druckluft über das Mehrkreisschutzventil, bspw. in die Umgebung oder andere Druckluftkreise mit geringerem Druck entweichen kann.

Aufgabe der Erfindung ist es, die genannte EG-RL zu erfüllen, die Zeit zum Wegfahren des Fahrzeuges zu verringern und die Druckluftbremsanlage noch sicherer zu machen. Eine Erhöhung der Sicherheit soll hierbei auch durch eine Verbesserung der Prozesssicherheit bei der Fertigung bzw. Montage der Bremsanlage bei gleichzeitig verhältnismäßig geringem Kostenaufwand erreicht werden.

Die Aufgabe wird erfindungsgemäß durch die Merkmale des Anspruches 1 gelöst.

Dadurch, daß aus dem Druckluftvorratsbehälter für den Bremskreis 3 keine Druckluft mehr durch das erfindungsgemäß vorgesehene Rückschlagventil und dadurch auch nicht über ein gelöstes Handbremsventil in den Druckluftkreis zum Lösen der Federspeicherbremszylinder gelangen kann, müssen die Federspeicherbremszylinder über das Mehrkreisschutzventil versorgt werden. Damit ist sichergestellt, daß zuerst die Betriebsbremskreise mit Druckluft versorgt werden, bis diese über den unteren Schließdruck sind und dann erst der Feststellbremskreis zum Lösen der Federspeicherbremszylinder mit Druckluft versorgt wird. Das Rückschlagventil wird hierbei erfindungsgemäß direkt mit Druckluftvorratsbehälter für den Bremskreis 3 verbunden. Bei Zugfahrzeugen, die mit Anhänger-/Aufliegerbremsanlage ausgerüstet werden, wird auf diese Weise gleich ein Druckluftvorratsbehälter mit angebautem Rückschlagventil verwendet.

In dem Fall, daß ein Betriebsbremskreis defekt ist und in diesem kein Druck aufbaubar ist, wird der defekte Betriebsbremskreis vom Mehrkreisschutzventil zunächst abgetrennt von dem intakten Betriebsbremskreis, bis der untere Schließdruck überschritten ist. Anschließend strömt die Druckluft auch in den defekten Betriebsbremskreis, aber nur soviel, daß der untere Schließdruck im intakten Betriebsbremskreis nicht unterschritten wird. Damit können aber die Federspeicherbremszylinder gelöst werden und das Fahrzeug ist mit nur einem intakten Betriebsbremskreis fahrbar und bremsbar.

In dem Fall, daß beide Betriebsbremskreise defekt sind, z. B. durch Sabotage, strömt die gesamte Druckluft infolge der Prioritätenschaltung im Mehrkreisschutzventil über die defekten Betriebsbremskreise ab, der untere Schließdruck wird nicht erreicht und damit werden die Federspeicherbremszylinder nicht gelöst. Das Fahrzeug ist nicht fahrbar.

In allen genannten Fällen wird somit die genannte EG-RL eingehalten bzw. erfüllt.

Ein umweltfreundlicher und betrieblicher Vorteil der erfindungsgemäßen Lösung ist, daß zum Lösen der Feststellbremsanlage nur die Luftmenge zum Befüllen der Zuführungsleitungen und der Federspeicherbremszylinder nötig ist, die vom Luftkompressor über das Mehrkreisschutzventil kommt. Diese Luftmenge ist im Verhältnis gering zu der Luftmenge, die zum ergänzenden Wiederbefüllen, z. B. um 2, 3 oder 4 bar Erhöhung des Druckes, in einem Druckluftkreis oder mehreren Druckluftkreisen nötig ist. Da bei den herkömmlichen Mehrkreisschutzventilen ein Ausgleich der Druckunterschiede in den einzelnen Druckluftkreisen erfolgt, solange die Drücke in den Druckluftkreisen über den unteren Schließdruck sind, müssen diese eben wieder befüllt werden.

Durch die erfindungsgemäße Feststellbremsanlage-Schutzschaltung wird der ursprüngliche Bremskreis 3 faktisch in zwei Teilbremskreise unterteilt. Der eine Teilbremskreis ist der für die Federspeicherbremszylinder des Zugfahrzeuges und der andere Teilbremskreis ist der für die Steuerung und Versorgung des Anhänger/Aufliegerbremskreises.

Neben der geringeren Zeit, die man braucht, um mit dem Fahrzeug wegfahren zu können, sind auch Defekte zu den genannten Teilbremskreisen schneller erkennbar. Weiterhin könnte das Mehrkreisschutzventil auch vereinfacht und damit kostengünstiger werden, da die Schutzfunktion aufgrund der weiteren, bereits vorhandenen Rückschlagventile für den Bremskreis 3 nicht mehr erforderlich ist.

In der Zeichnung ist ein Ausführungsbeispiel der Erfindung schematisch dargestellt.

Es zeigen:
- Fig. 1: eine Feststellbremsanlage im Fahrzeug,
- Fig. 2: ein Schema der gesamten Bremsanlage,
- Fig. 3: ein Schema der gesamten Bremsanlage nach dem Stand der Technik.

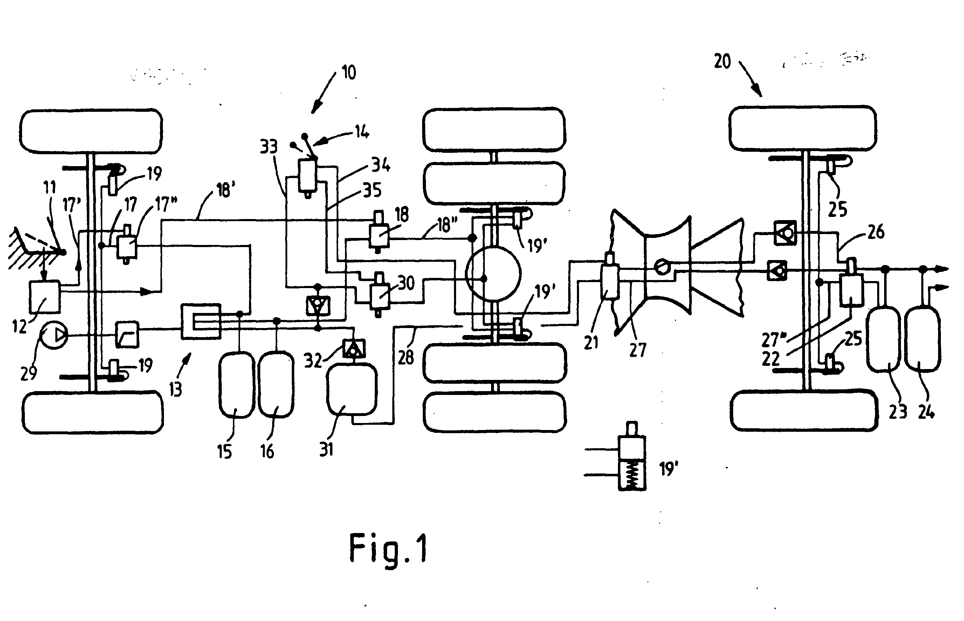

Die Fig. 1 zeigt die Anordnung der Feststellbremsanlage und einer Betriebsbremsanlage im Zugwagen 10 bzw. in einer Sattelzugmaschine 10 und im Anhänger 20. Durch das Einlegen der Feststellbremse mit dem Feststellbremsventil 14 wird der Druck in den Leitungen 34 und 35 abgelassen. Die Druckluftleitung 35 ist mit dem Steuerventil 30 verbunden, das die Druckluft in den Federspeicherbremszylindern 19' abläßt, wenn in der Leitung 35 keine Druckluft mehr vorhanden ist. Dadurch ist die Feststellbremse im Zugwagen 10 eingelegt.

Die Druckluftleitung 34 ist mit dem Anhänger-Steuerventil 21 verbunden, das, wenn die Druckluftleitung 34 keine Druckluft mehr hat, die Leitung 26 mit Druck beaufschlag. Dadurch ist die Bremse des Anhängers 20 eingelegt. Die Feststellbremse des Anhängers/Aufliegers ist, wenn dieser nicht mit dem Zugfahrzeug verbunden ist, im Normalfall eine mechanische Bremse, die mittels eines Handbremshebels oder einer Kurbel am Anhänger einlegbar ist.

Der Druckluftvorratsbehälter 31 beliefert mit dem erfindungsgemäß angeordneten Rückschlagventil 32 nur den Anhängerbremskreis und die Anhängerversorgung über die Leitung 28, das Anhängersteuerventil 21, die Anhängersteuerleitung 26 und die Anhängerversorgungsleitung 27. Bei gelöstem Feststellbremsventil 14 (Feststellbremse gelöst), kann nun keine Druckluft mehr über die Leitung 33, das Handbremsventil 14 und die Steuerleitung 35 strömen, die dann das Signal im Relaisventil 30 für das Befüllen der Federspeicherbremszylinder 19' geben könnte. Ein Lösen der Federspeicherbremszylinder 19' ist nur möglich, wenn vorher die Betriebsbremskreise betriebsbereit sind und damit der Druck in den Druckluftvorratsbehältern 15, 16 über dem unteren Schließdruck ist. Weiterhin kann durch das Rückschlagventil 32 Druckluft nicht mehr in Richtung Mehrkreisschutzventil 13 strömen. Dadurch bleibt bei intakter Bremsanlage des Anhängers 20 die Druckluft im Druckluftvorratsbehälter 31 und in der Leitung 28 erhalten. Ein Druckluftausgleich über das Mehrkreisschutzventil 13 mit den Druckluftvorratsbehältern 15, 16 ist wegen des Rückschlagventiles 32 nicht möglich.

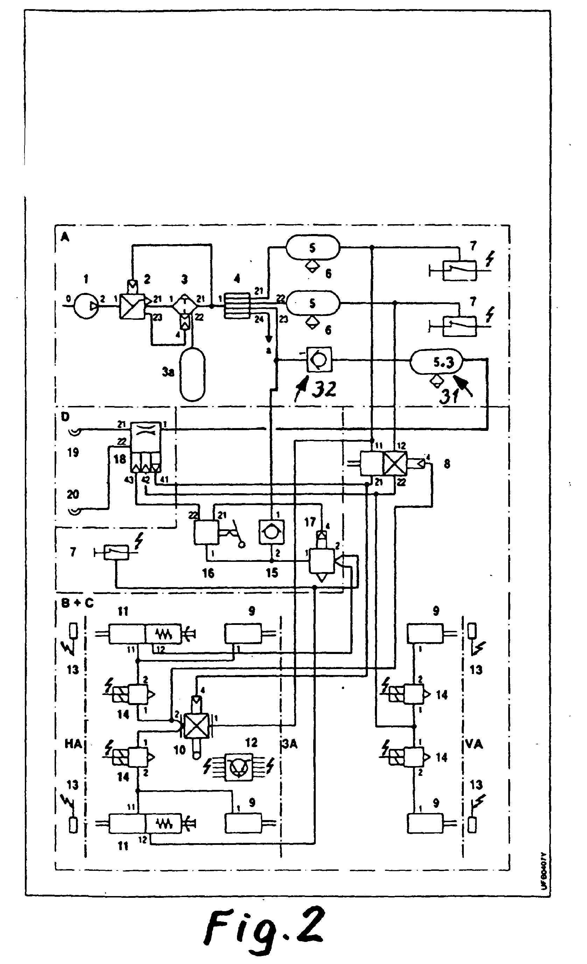

Die Fig. 2 zeigt im Schaltschema eine Betriebs- und Feststellbremsanlage mit dem erfindungsgemäßen Einbau des Rückschlagventiles 32, dem Druckluftvorratsbehälter 31 (5.3) und der entsprechenden Leitungsführung für die Druckluft in einem Zugwagen.

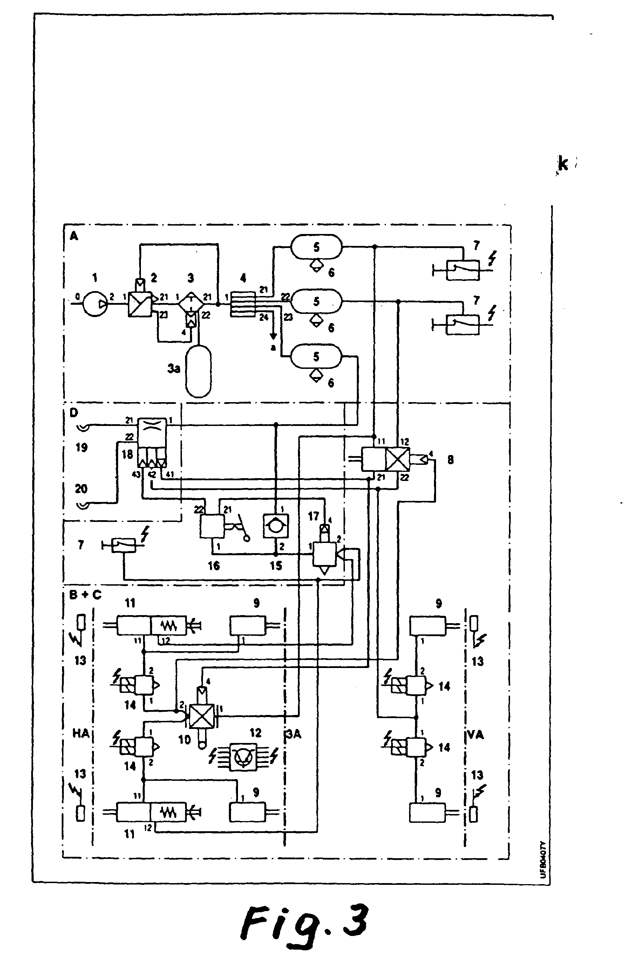

Die Fig. 3 zeigt den Stand der Technik in einem Zugwagen. Hier können, wenn nahezu kein Druckluftvorrat für die Betriebsbremsen (Druckluftvorratsbehälter 5 mit den Zuleitungen 21 und 22) vorhanden ist, die Federspeicherbremszylinder 11 (Kombibremszylinder 11) über den Druckluftvorrat im Druckluftbehälter 5 mit der Zuleitung 23 über das Rückschlagventil 15, das gelöste Feststellbremsventil 16 und über das Relaisventil 17 gelöst werden. Die genannte EG-RL wird in diesem Fall nicht erfüllt. Weiterhin ist über das Mehrkreisschutzventil 4 ist ein Druckluftausgleich in den einzelnen Druckluftkreisen einschließlich der Druckluftvorratsbehälter 5, solange die Drücke über dem unteren Schließdruck liegen, möglich. Ein ergänzendes Befüllen aller Druckluftbehälter ist dadurch bei Inbetriebsetzen des Fahrzeuges erforderlich (erfolgt automatisch).

### Bezugszeichenliste gilt (für Fig. 1)

- 10: Zugwagen
- 11: Bremspedal
- 12: Bremssteuergerät
- 13: Mehrkreisschutzventil
- 14: Feststellbremsventil
- 17: Bremsmodul
- 17': Steuerleitung (pneumatisch oder elektrisch)
- 17": Druckluftbremsleitung, Betriebsbremse
- 18: Bremsmodul
- 18': Steuerleitung (pneumatisch oder elektrisch)
- 18": Druckluftbremsleitung, Betriebsbremse
- 19: Druckluftbremszylinder
- 19': Druckluftbremszylinder und Federspeicherbremszylinder (Tristopzylinder)
- 20: Anhänger
- 21: Anhängersteuerventil
- 22: Bremsmodul im Anhänger
- 23: Druckluftvorratsbehälter im Anhänger
- 24: Druckluftvorratsbehälter im Anhänger
- 25: Bremszylinder im Anhänger
- 26: Druckluftsteuerleitung, Anhänger
- 27: Druckluftversorgungsleitung im Anhänger
- 27'': Druckluftbremsleitung im Anhänger
- 28: Druckluftversorgungsleitung im Zugwagen für Anhängerbremse
- 29: Druckluftkompressor
- 30: Relaisventil
- 31: Druckluftvorratsbehälter, Bremskreis 3
- 32: Rückschlagventil
- 33: Druckluftleitung für Relaisventil und Feststellbremsventil, Zugwagen
- 34: Druckluftsteuerleitung für Anhängersteuerventil
- 35: Drucktuftsteuerteitung für Zugwagenfeststellbremse

## Patentansprüche

1. Feststellbremsanlage-Schutzschaltung in einem Lastkraftwagen mit zwei Betriebsbremskreisen für das Zugfahrzeug und je Betriebsbremskreis mit mindestens einem Druckluftvorratsbehälter, mit einem Feststellbremskreis und mit diesem in Wirkverbindung stehenden Anhänger- oder Aufliegerbremskreis (3) und einem Druckluftvorratsbehälter im Zugfahrzeug für den Bremskreis (3) wobei der Druckluftvorratsbehälter (31) für den Bremskreis (3) über ein Rückschlagventil (32) mit dem Mehrkreisschutzventil (13) verbunden ist, so dass Druckluft nur zur Befüllung des Druckluftvorratsbehälters (31) strömen kann und **dadurch** der Druckluftvorratsbehälter (31) für den Bremskreis(3)nur in die Anhänger- oder Aufliegerbremsanlage Druckluft liefert und damit vom Luftverbrauch für die Zugfahrzeug-Feststellbremsanlage abgetrennt ist, **dadurch gekennzeichnet, dass** das Rückschlagventil (32) direkt am Druckluftvorratsbehälter (31) für den Bremskreis (3) befestigt ist.

## Claims

1. Protective circuit for a parking-brake system in a truck with two service-brake circuits for the tractor vehicle and with at least one compressed-air reservoir tank for each service-brake circuit, with one parking-brake circuit and a trailer or semitrailer brake circuit interacting with said parking-brake circuit and with a compressed-air reservoir in the tractor vehicle for the brake circuit (3), whereby the compressed-air reservoir (31) for the brake circuit (3) is connected with the multiple-circuit protection valve (13) via a check valve (32) so that compressed air can flow only for filling the compressed-air reservoir (31) which in turn supplies compressed air for the brake circuit (3) only to the trailer or semitrailer brake system and thus separates it from the air consumption for the parking-brake system for the tractor vehicle, **characterised in that** the check valve (32) is fastened directly to the compressed-air reservoir tank (31) for the brake circuit (3).

## Revendications

1. Circuit de protection du dispositif de frein d'immobilisation dans un camion avec deux circuits de frein de service pour un véhicule tracteur et chaque circuit de frein de service avec un réservoir pneumatique, avec un circuit de frein d'immobilisation et avec ce circuit de frein de remorque ou semi-remorque (3) en interaction et un réservoir pneumatique dans le véhicule tracteur destiné au circuit de freinage (3), auquel cas le réservoir pneumatique (31) destiné au circuit de freinage (3) est relié à la valve de protection à plusieurs voies (13) via une valve antiretour (32) de telle manière que l'air comprimé puisse s'écouler uniquement pour remplir le réservoir pneumatique (31) et, par ce moyen, le réservoir pneumatique (31) du circuit de freinage (3) ne fournisse de l'air comprimé qu'à l'installation de freinage de la remorque ou de la semi-remorque et soit ainsi séparé de la consommation d'air comprimé destiné à l'installation du frein d'immobilisation du véhicule tracteur, **caractérisé en ce que** la valve antiretour (32) est fixée directement au réservoir pneumatique (31) destiné au circuit de freinage (3).
